# FASCICULE DE BREVET EUROPEEN

(11) **EP 3 858 677 B1**
(45) Date de publication et mention de la délivrance du brevet: **02.11.2022**
(21) Numéro de dépôt: 20213006.8
(22) Date de dépôt: 10.12.2020
(51) Int. Cl.: B60R 3/02

(54) **DISPOSITIF DE MARCHEPIED POUR VÉHICULE**
TRITTSTUFENANORDNUNG FÜR FAHRZEUGE
STEP ASSEMBLY FOR VEHICLES

(30) Priorité: 28.01.2020 FR 2000770
(43) Date de publication de la demande: 04.08.2021
(73) Titulaire: NEXTER Systems, 78034 Versailles Cedex (FR)
(72) Inventeur: CIRIA, Samuel, 18023 BOURGES (FR); LASHERMES, Anne-Claire, 18023 BOURGES (FR)
(74) Mandataire: Cabinet Chaillot

(56) Documents cités:
- DE-B- 1 220 276
- JP-A- 2016 064 673
- US-A- 608 617
- US-A- 2 246 986
- US-A- 3 807 757
- US-A- 5 941 342

## Description

Le domaine technique de l'invention est celui des dispositifs de marchepied pliant pour l'embarquement et le débarquement à bord d'un véhicule.

Afin de pouvoir aisément déplier le marchepied pour le placer dans une position dite d'accès, le brevet EP2072337 décrit un marchepied comportant une marche équipée d'une partie saillante qui, lorsque l'on prend appui dessus, déclenche l'abaissement de la marche sous l'action d'un ressort à gaz.

Une fois la marche dépliée il faut alors relever celle-ci à la main pour la remettre en position relevée. On note que cette marche est solidaire d'un mécanisme de bielles articulées relativement à un bâti qui s'étend très bas sous la marche, quelle que soit la position de la marche. Un tel dispositif, au travers de son bâti notamment, est très exposé aux éventuels chocs avec le terrain sur lequel évolue le véhicule, en particulier dans le cas d'un véhicule tout terrain, ce qui risque de provoquer sa détérioration.

Le document US 3 807 757 concerne un dispositif de marchepied pour un véhicule selon la revendication 1.

L'invention propose un nouveau marchepied de structure simple et compatible des contraintes de franchissement et d'environnement dues à l'utilisation d'un véhicule en tout terrain.

Ainsi, l'invention a pour objet un dispositif de marchepied pour un véhicule, dispositif comportant au moins une première marche solidaire d'un bâti destiné à être fixé au véhicule ainsi qu'au moins un bras comportant une seconde marche fixée au niveau d'une première extrémité du bras, bras monté pivotant relativement au bâti autour d'un axe horizontal entre une position angulaire dite relevée et une position angulaire dite abaissée dans laquelle la seconde marche est sensiblement horizontale, dispositif caractérisé en ce qu'il comporte un dispositif de verrouillage de la seconde marche en position relevée, une partie de ce dispositif de verrouillage étant en saillie au-dessus de la première marche de manière à ce qu'un appui sur la partie saillante déverrouille le dispositif de verrouillage afin que la seconde marche pivote jusqu'à sa position abaissée.

Selon un mode de réalisation, le dispositif de verrouillage pourra comporter au moins un doigt monté basculant sur un pivot par rapport au bâti, contre l'action d'un moyen élastique, une extrémité du doigt formant un crochet et le bras comportant un ergot destiné à s'engager dans le crochet dont la forme est définie de façon à maintenir ainsi le bras en position relevée par l'action du moyen élastique, la partie saillante du dispositif de verrouillage étant solidaire du doigt et un appui exercé sur cette partie saillante faisant pivoter le doigt contre l'action du moyen élastique, ce qui permet d'abaisser le crochet dans une position permettant de libérer l'ergot.

Avantageusement, le doigt pourra comporter un profil de guidage au-dessus du crochet autorisant la remontée de l'ergot et du bras au-delà de la position relevée.

Selon un mode particulier de réalisation, le profil de guidage du doigt au-dessus du crochet pourra se terminer par une encoche assurant un maintien de l'ergot au-delà de la position relevée.

Avantageusement, le dispositif pourra comporter une butée déterminant la position abaissée de la seconde marche.

Selon un mode particulier de réalisation, la butée pourra comporter au moins un lien souple non élastique reliant le bras au bâti.

Avantageusement, le dispositif pourra comporter au moins un amortisseur situé entre le bâti et le bras afin de limiter le choc du bras avec la butée lors de l'abaissement de la seconde marche.

L'invention sera mieux comprise à la lecture de la description jointe, description faite au regard des dessins en annexe, dessins dans lesquels :
[Fig. 1] montre une vue schématique latérale d'un dispositif de marchepied selon l'invention en position relevée et solidaire d'un véhicule militaire.
[Fig. 2] montre une vue schématique latérale d'un dispositif de marchepied selon l'invention en position relevée.
[Fig. 3] montre une vue schématique latérale d'un dispositif de marchepied selon l'invention en position abaissée.
[Fig. 4] montre une vue schématique latérale d'un dispositif de marchepied selon l'invention solidaire d'un véhicule militaire lors d'une opération de franchissement particulière.
[Fig. 5] montre une vue agrandie du dispositif de marchepied selon la figure 4.

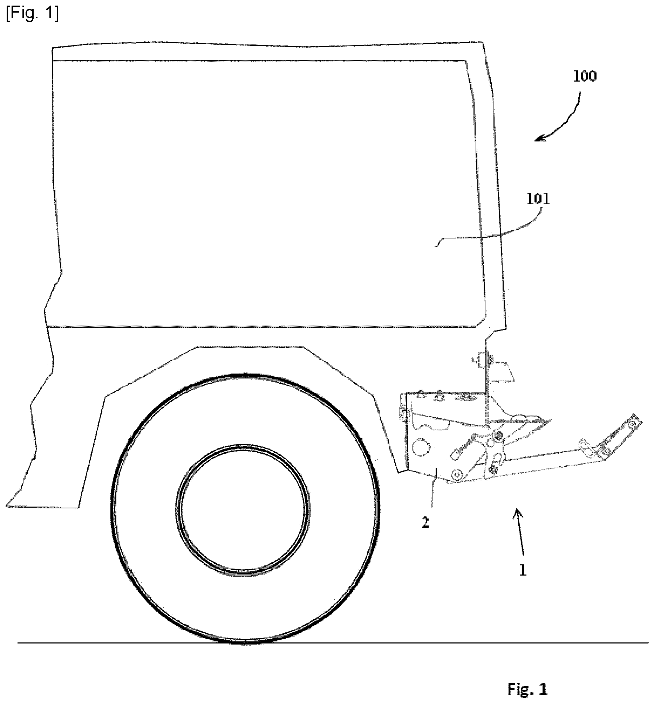

Selon la figure 1, un véhicule militaire 100 comporte un dispositif de marchepied 1 solidaire de l'arrière du véhicule 100 au niveau d'une porte d'accès à un habitacle 101 du véhicule (porte non visible).

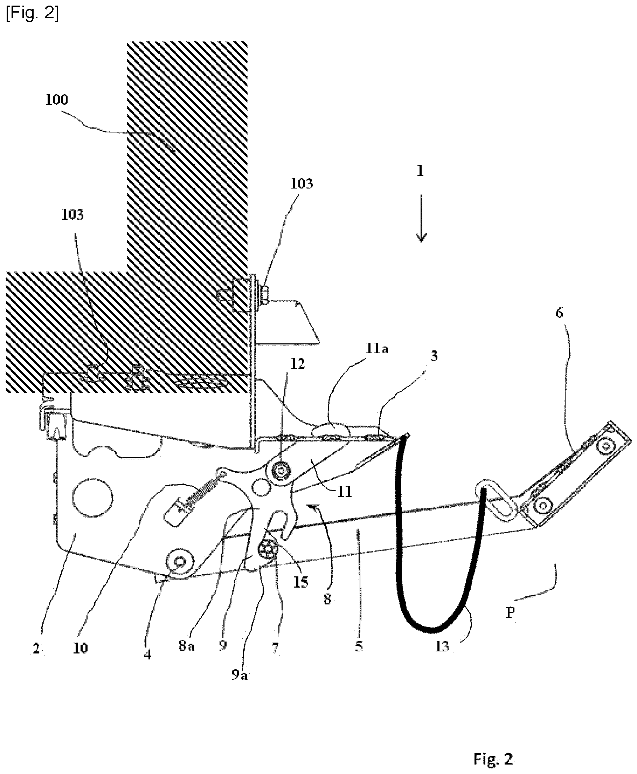

Selon la figure 2, le dispositif de marchepied 1 comporte un bâti 2 qui permet de solidariser le dispositif de marchepied 1 au véhicule 100 par des boulons 103. Le bâti 2 comporte deux ailes latérales 21 qui s'étendent sensiblement verticalement sous le véhicule et sont solidaires d'une première marche 3 (une seule aile 21 est visible sur la figure).

L'extrémité de chaque aile 21 du bâti 1 porte un axe 4 horizontal destiné à permettre le pivotement d'un bras 5 à l'extrémité duquel se trouve une seconde marche 6 qui relie chaque bras 5 entre eux. Concrètement, pour la rigidité du dispositif, un seul axe 4 relie les deux ailes 21. Un bras 5 est fixé à chaque extrémité de l'axe 4 et la seconde marche 6 est solidaire des extrémités des deux bras 5.

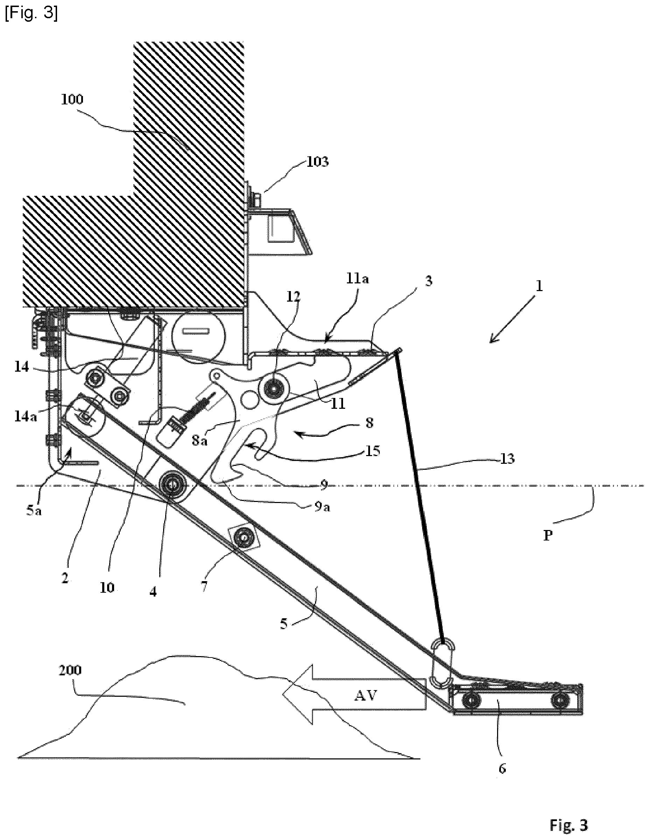

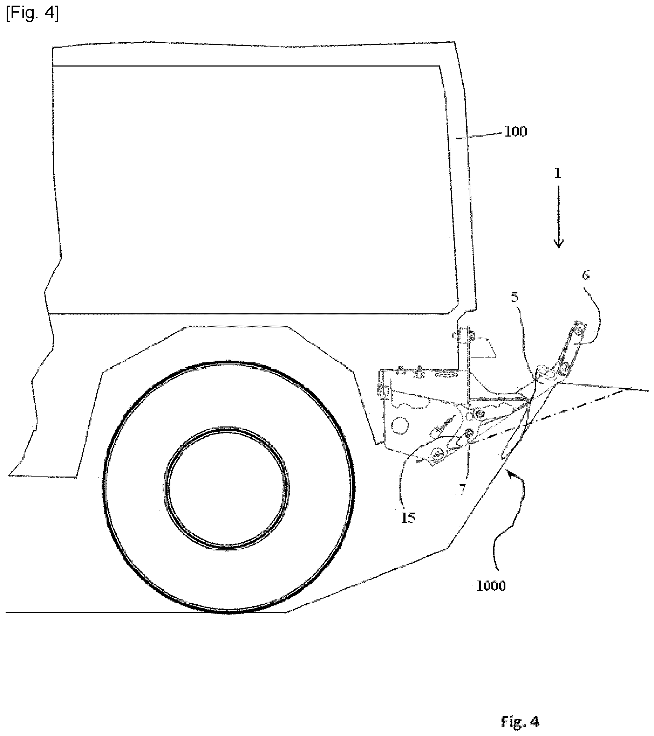

L'axe 4 permet à la seconde marche 6 de pivoter entre une position relevée telle que visible à la figure 1 où la seconde marche 6 est située au-dessus d'un plan P horizontal passant par l'axe 4, et une position abaissée visible aux figures 3 et 4. Chaque bras 5 comporte un ergot 7, qui est fixé au bras 5 considéré entre l'axe 4 et la seconde marche 6.

Le dispositif de verrouillage 8 comporte au moins un doigt 8a monté basculant sur un pivot 12 par rapport au bâti 2.

Concrètement il y a un doigt 8a au niveau de chaque bras 5, donc à chaque extrémité de l'axe 4. Les figures 2, 3 et 5 montrent donc une moitié du dispositif de marchepied 1 et de son dispositif de verrouillage 8.

Le doigt 8a bascule contre l'action d'un moyen élastique 10 (ressort de rappel). On remarque sur les figures que l'extrémité du doigt 8a forme un crochet 9 et l'ergot 7 porté par le bras 5 est destiné à s'engager dans ce crochet 9.

La forme du crochet 9 est définie de façon à maintenir le bras en position relevée par l'action du moyen élastique 10.

Le dispositif de verrouillage 8 comporte une languette 11 solidaire du doigt 8a et dont l'extrémité 11a forme une partie saillante qui traverse la première marche 3 par une fente. Ainsi un appui du pied d'un personnel débarquant hors du véhicule (personnel non représenté) sur la partie saillante 11a fera basculer le doigt 8a contre l'action du moyen élastique 10. La forme du crochet 9 est telle que ce basculement suffit à libérer l'ergot 7. La seconde marche 6 se trouve donc déverrouillée et les bras 5 et la marche 6 pivotent autour de l'axe 4 par le seul effet de la gravité.

Selon la figure 3, consécutivement à l'abaissement de la seconde marche 6, celle-ci est arrêtée dans son mouvement par une butée 13 qui comporte une paire de liens souples 13 (un de chaque côté de la seconde marche 6) reliant la première marche 3 à la seconde marche 6. Les liens 13 permettent de limiter le débattement angulaire de la seconde marche et ils déterminent donc la position angulaire abaissée où la seconde marche 6 est située sous la première marche 3 et en dessous du plan horizontal P passant par l'axe 4. La seconde marche 6 est alors sensiblement horizontale et elle permet un débarquement ou un embarquement aisé depuis le véhicule 100 (véhicule visible à la figure 1).

Selon un mode de réalisation, le dispositif de marchepied 1 comporte aussi un amortisseur 14 solidaire du bâti 2 et situé entre le bâti 2 et au moins un bras 5 lorsqu'il est abaissé. Comme on le voit à la figure 3, l'amortisseur 14 comporte une tige 14a qui vient former une zone de butée pour une extrémité arrière 5a du bras 5. Un seul amortisseur 14 suffit au niveau d'un des bras 5.

L'amortissement se fera préférentiellement sur les quelques degrés (environ 5°) de la fin du pivotement d'abaissement des bras. Ainsi on ne ralentit pas le mouvement d'abaissement de la seconde marche 6 mais on évite tout arrêt brutal des bras 5 par les seuls liens 13, ce qui nuirait à la discrétion de l'abaissement (bruit dû au choc d'arrêt) et à terme à la solidité du dispositif 1.

L'amortisseur 14 n'est pas solidaire du bras 5 afin de ne pas ralentir le relevage de la seconde marche 6 de la position angulaire abaissée à la position angulaire relevée. Ce relèvement se fait manuellement ou par crochetage du pied du dernier personnel embarquant (personnel non représenté). La forme en biseau 9a du crochet 9 permet un mouvement de verrouillage automatique du bras 5. Lors du relèvement de la marche, l'ergot 5 fait pivoter le doigt 8a contre le moyen élastique 10. Une fois le biseau 9a franchi, le moyen élastique 10 fait revenir le doigt et le crochet 9 accroche l'ergot 7. Le dispositif reprend la configuration illustrée à la figure 2.

Il est à noter que, lorsque le véhicule avance (sens de la flèche AV), si un obstacle 200 vient à heurter les bras 5 ou la seconde marche 6, ils sont projetés vers le haut et avantageusement accrochés par inertie au dispositif de verrouillage 8. Il en est de même avec les éventuels soubresauts de roulement sur terrain accidentés et s'il a été oublié de relever la seconde marche 6 du marchepied 1.

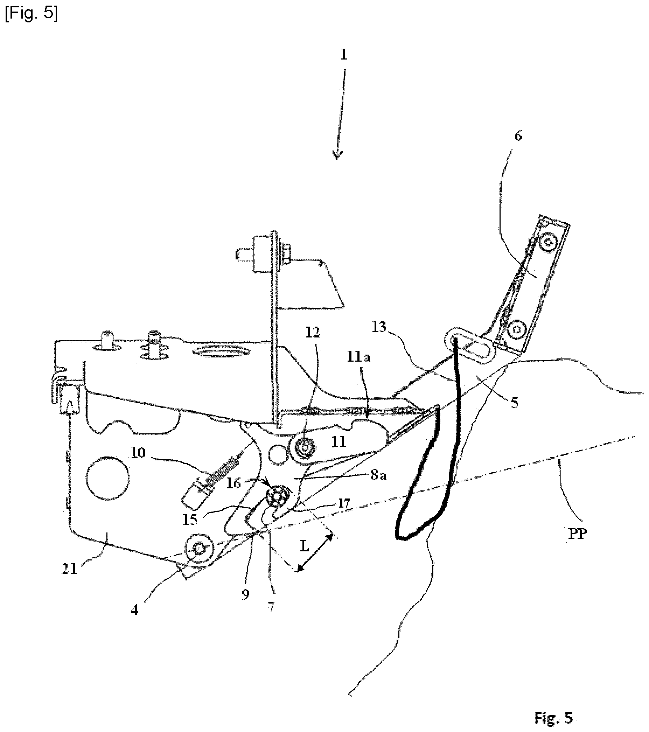

Pour cela, on note plus particulièrement aux figures 4 et 5 que le doigt 8a comporte un profil de guidage 15 au-dessus du crochet 9 qui autorise la remontée de l'ergot 7 et donc du bras 5 au-delà de la position relevée. La position relevée de la seconde marche 6 n'est donc pas une position rigide fixée par le crochet 9 mais plutôt une position relevée minimale.

Le profil de guidage 15 autorise donc la remontée de l'ergot 7 et du bras 5 au-delà de la position angulaire dite relevée indiqué en pointillés PP sur la figure 5.

Ainsi lors du franchissement d'une rupture abrupte de terrain 1000 par exemple, l'interférence de la seconde marche 6 ou des bras 5 avec le sol n'engendre pas de contraintes sur le dispositif de marchepied 1.

On remarque par ailleurs sur les figures (et en particulier la figure 5) que le profil de guidage 15 du doigt 8a au-dessus du crochet 9 se termine par une encoche 16 dans laquelle s'engage l'ergot 7. Cette encoche 16 est délimitée par un repli 17 du doigt 8a. L'encoche 16 assure donc un maintien de l'ergot 7 au-delà de la position relevée. Les doigts 8a et les bras 5 se trouvent donc solidaires de façon temporaire et il n'y a pas de décrochage de la seconde marche 6 lors de ce relèvement extrême. On évite ainsi la chute de la seconde marche en cas de choc tout terrain (rebond).

Lorsque le moyen élastique 10 fera basculer le doigt 8a, il ramènera le second doigt à sa position de la figure 2 et la seconde marche 6 reprendra sa position relevée stable, retenue par les crochets 9 (figure 2).

L'homme du Métier déterminera la longueur L du profil de guidage 15 pouvant être parcourue par l'ergot 7 en fonction de l'amplitude angulaire au-delà de la position relevée qu'il souhaite donner à la seconde marche 6.

## Revendications

1. Dispositif de marchepied (1) pour un véhicule (100), dispositif comportant au moins une première marche (3) solidaire d'un bâti (2) destiné à être fixé au véhicule (100) ainsi qu'au moins un bras (5) comportant une seconde marche (6) fixée au niveau d'une première extrémité du bras (5), bras (5) monté pivotant relativement au bâti (2) autour d'un axe (4) horizontal entre une position angulaire dite relevée et une position angulaire dite abaissée dans laquelle la seconde marche (6) est sensiblement horizontale, dispositif (1) ***caractérisé en ce qu'***il comporte un dispositif de verrouillage (8) de la seconde marche (6) en position relevée, une partie (11a) de ce dispositif de verrouillage (8) étant en saillie au-dessus de la première marche (3) de manière à ce qu'un appui sur la partie saillante (11a) déverrouille le dispositif de verrouillage (8) afin que la seconde marche (6) pivote jusqu'à sa position abaissée.

2. Dispositif de marchepied (1) selon la revendication 1, **caractérisé en ce que** le dispositif de verrouillage (8) comporte au moins un doigt (8a) monté basculant sur un pivot (12) par rapport au bâti (2), contre l'action d'un moyen élastique (10), une extrémité du doigt (8a) formant un crochet (9) et le bras (5) comportant un ergot (7) destiné à s'engager dans le crochet (9) dont la forme est définie de façon à maintenir ainsi le bras en position relevée par l'action du moyen élastique (10), la partie saillante (11a) du dispositif de verrouillage (8) étant solidaire du doigt (8a) et un appui exercé sur cette partie saillante faisant pivoter le doigt (8a) contre l'action du moyen élastique (10), ce qui permet d'abaisser le crochet (9) dans une position permettant de libérer l'ergot (7).

3. Dispositif de marchepied (1) selon la revendication 2, **caractérisé en ce que** le doigt (8a) comporte un profil de guidage (15) au-dessus du crochet (9) autorisant la remontée de l'ergot (7) et du bras (5) au-delà de la position relevée.

4. Dispositif de marchepied (1) selon la revendication 3, **caractérisé en ce que** le profil de guidage (15) du doigt au-dessus du crochet (9) se termine par une encoche (16) assurant un maintien de l'ergot (7) au-delà de la position relevée.

5. Dispositif selon l'une des revendications 1 à 4, **caractérisé en ce qu'**il comporte une butée (13) déterminant la position abaissée de la seconde marche (6).

6. Dispositif (1) selon la revendication 5, **caractérisé en ce que** la butée (13) comporte au moins un lien souple (13) non élastique reliant le bras (5) au bâti (2).

7. Dispositif (1) selon une des revendications 5 ou 6, **caractérisé en ce qu'**il comporte au moins un amortisseur (14) situé entre le bâti (2) et le bras (5) afin de limiter le choc du bras (5) avec la butée (13) lors de l'abaissement de la seconde marche (6).

## Patentansprüche

1. - Trittstufenanordnung (1) für ein Fahrzeug (100), wobei die Anordnung mindestens eine erste Stufe (3) umfasst, die fest mit einem Gestell (2) verbunden ist, das ausgelegt ist, um an das Fahrzeug (100) befestigt zu sein, sowie mindestens einen Arm (5), der eine zweite Stufe (6) umfasst, die auf der Ebene eines ersten Endes des Arms (5) befestigt ist, wobei der Arm (5) schwenkend mit Bezug auf das Gestell (2) um eine horizontale Achse (4) zwischen einer Winkelposition, bezeichnet als angehoben, und einer Winkelposition, bezeichnet als abgesenkt, montiert ist, in der die zweite Stufe (6) im Wesentlichen horizontal ist, **dadurch gekennzeichnet, dass** die Anordnung (1) eine Anordnung zur Verriegelung (8) der zweiten Stufe (6) in der angehobenen Position umfasst, wobei ein Teil (11a) dieser Anordnung zur Verriegelung (8) über die erste Stufe (3) vorsteht, so dass ein Drücken auf den vorstehenden Teil (11a) die Anordnung zur Verriegelung (8) entriegelt, so dass die zweite Stufe (6) bis in ihre abgesenkte Position schwenkt.

2. - Trittstufenanordnung (1) nach Anspruch 1, **dadurch gekennzeichnet, dass** die Anordnung zur Verriegelung (8) mindestens einen Finger (8a) umfasst, der kippbar auf einem Schwenkpunkt (12) mit Bezug auf das Gestell (2) gegen die Wirkung eines elastischen Mittels (10) montiert ist, wobei ein Ende des Fingers (8a) einen Haken (9) bildet und der Arm (5) einen Vorsprung (7) umfasst, der ausgelegt ist, um in den Haken (9) einzugreifen, wobei die Form derart definiert ist, dass auf diese Weise der Arm durch die Wirkung des elastischen Mittels (10) in der angehobenen Position gehalten wird, wobei der vorspringende Teil (11a) der Anordnung zur Verriegelung (8) mit dem Finger (8a) fest verbunden ist, und wobei ein Drücken, das auf diesen vorspringenden Teil ausgeübt wird, den Finger (8a) gegen die Wirkung des elastischen Mittels (10) in Drehung versetzt, wodurch ermöglicht wird, den Haken (9) in eine Position abzusenken, die ermöglicht, den Vorsprung (7) freizusetzen.

3. - Trittstufenanordnung (1) nach Anspruch 2, **dadurch gekennzeichnet, dass** der Finger (8a) ein Führungsprofil (15) über dem Haken (9) umfasst, das das Heben des Vorsprungs (7) und des Arms (5) über die angehobene Position hinaus ermöglicht.

4. - Trittstufenanordnung (1) nach Anspruch 3, **dadurch gekennzeichnet, dass** das Führungsprofil (15) des Fingers über dem Haken (9) durch eine Kerbe (16) endet, die sicherstellt, dass der Vorsprung (7) über der angehobenen Position hinaus gehalten wird.

5. - Anordnung nach einem der Ansprüche 1 bis 4, **dadurch gekennzeichnet, dass** sie einen Anschlag (13) umfasst, der die abgesenkte Position der zweiten Stufe (6) bestimmt.

6. - Anordnung (1) nach Anspruch 5, **dadurch gekennzeichnet, dass** der Anschlag (13) mindestens eine flexible, nicht elastische Verbindung (13) umfasst, die den Arm (5) mit dem Gestell (2) verbindet.

7. - Anordnung (1) nach einem der Ansprüche 5 oder 6, **dadurch gekennzeichnet, dass** sie mindestens einen Stoßdämpfer (14) umfasst, der sich zwischen dem Gestell (2) und dem Arm (5) befindet, um das Anstoßen des Arms (5) an den Anschlag (13) zu begrenzen, wenn die zweite Stufe (6) abgesenkt wird.

## Claims

1. - A footstep device (1) for a vehicle (100), the device comprising at least one first step (3) secured to a frame (2) intended to be fixed to the vehicle (100) as well as at least one arm (5) comprising a second step (6) fixed at a first end of the arm (5), the arm (5) being pivotally mounted relative to the frame (2) about a horizontal pin (4) between an angular position, so-called raised position, and an angular position, so-called lowered position, in which the second step (6) is substantially horizontal, the device (1) being **characterised in that** it comprises a device (8) for locking the second step (6) in the raised position, a part (11a) of this locking device (8) projecting above the first step (3) in such a way that a pressure on the projecting part (11a) unlocks the locking device (8) so that the second step (6) pivots to its lowered position.

2. - The footstep device (1) according to claim 1, **characterised in that** the locking device (8) comprises at least one finger (8a) mounted so as to be tiltable around a pivot pin (12) relative to the frame (2), against the action of an elastic means (10), one end of the finger (8a) forming a hook (9) and the arm (5) comprising a lug (7) intended to engage in the hook (9), the shape of which is defined so as to hold the arm in the raised position by the action of the elastic means (10), the projecting part (11a) of the locking device (8) being secured to the finger (8a) and a pressure exerted on this projecting part causing the finger (8a) to pivot against the action of the elastic means (10), which makes it possible to lower the hook (9) into a position allowing the release of the lug (7).

3. - The footstep device (1) according to claim 2, **characterised in that** the finger (8a) comprises a guiding profile (15) above the hook (9), allowing the lug (7) and the arm (5) to be raised beyond the raised position.

4. - The footstep device (1) according to claim 3, **characterised in that** the guiding profile (15) of the finger above the hook (9) ends in a notch (16) ensuring that the lug (7) is held beyond the raised position.

5. - The device according to one of claims 1 to 4, **characterised in that** it comprises a stop (13) determining the lowered position of the second step (6).

6. - The device (1) according to claim 5, **characterised in that** the stop (13) comprises at least one non-elastic flexible link (13) connecting the arm (5) to the frame (2).

7. - The device (1) according to one of claims 5 or 6, **characterised in that** it comprises at least one shock absorber (14) located between the frame (2) and the arm (5) in order to limit the impact of the arm (5) against the stop (13) when the second step (6) is lowered.
